# EUROPÄISCHE PATENTANMELDUNG

(11) **EP 4 578 650 A2**
(43) Veröffentlichungstag der Anmeldung: **02.07.2025**
(21) Anmeldenummer: 25177396.6
(22) Anmeldetag: 04.03.2021
(51) Int. Cl.: B33Y 40/00

(54) **VERFAHREN ZUM ERRICHTEN EINES TURMS FÜR EINE WINDENERGIEANLAGE**

(62) Teilanmeldung aus: 21160711.4
(71) Anmelder: Nordex Energy SE & Co. KG, 22419 Hamburg (DE)
(72) Erfinder: Malischewski, Mathias, 18057 Rostock (DE)
(74) Vertreter: Hauck Patent- und Rechtsanwälte PartmbB

(57) **Zusammenfassung**

Verfahren zum Errichten eines Turms für eine Windenergieanlage, wobei der Turm eine Mehrzahl von übereinanderstehenden Sektionen aufweist, dadurch gekennzeichnet, dass das Verfahren folgende Schritte aufweist:
a. Herstellen von mindestens zwei ineinander stehenden Sektionen des Turms mit einem additiven Herstellungsverfahren, wobei eine Vorrichtung zum additiven Herstellen der Sektionen zusätzlich ein Werkzeug zum Veredeln der Oberfläche der Sektionen aufweist,
b. Bereitstellen der hergestellten Sektionen des Turms an einem Errichtungsplatz des Turms und
c. Errichten des Turms aus den bereitgestellten Sektionen auf dem Errichtungsplatz, indem diese übereinandergestellt werden.

## Beschreibung

Die vorliegende Erfindung betrifft ein Verfahren zum Errichten eines Turms für eine Windenergieanlage, der eine Mehrzahl von übereinanderstehenden Sektionen aufweist.

Eine Windenergieanlage weist einen Turm auf, der auf einem Fundament errichtet ist. Der Turm trägt ein Maschinenhaus, in dem ein elektrischer Generator angeordnet ist, der von einem Rotor angetrieben wird.

In der Vergangenheit hat die Leistung der Windenergieanlagen stark zugenommen, verbunden mit einer Vergrößerung im Durchmesser der Rotoren. Um größere Rotorblätter verwenden zu können, ist es erforderlich, dass die Höhe des Turms zunimmt. Oft werden die Türme daher aus Sektionen gebaut, die übereinander angeordnet sind. Bei den Sektionen ist zu unterscheiden, ob es geschlossene Sektionen sind, bei denen jede Sektion einen geschlossenen Ring darstellt, oder ob mehrere Sektionssegmente miteinander verbunden gemeinsam eine geschlossene Sektion bilden. Bei den gerade in dem unteren Bereich des Turms vorliegenden Durchmessern ist es aus Transportgründen oft erforderlich, einzelne geschlossene Sektionen in Segmente zu unterteilen, um diese besser transportieren zu können.

Aus EP 2 980 337 B1 ist ein Verfahren zur Montage von Betontürmen für Windkraftanlagen bekannt geworden. Bei dem Verfahren werden vorgegossene Betonsegmente in der Nähe des Turmsockels ineinander stehend zu ringförmigen Sektionen miteinander verbunden.

Aus WO 2019/190956 A1 ist ein Turm einer Windenergieanlage bekannt geworden, der mindestens einen Turmabschnitt aus verschiedenen Materialien besitzt. Der Turmabschnitt besitzt eine in einem additiven Verfahren hergestellte Wand, welche ein erstes Material und eine Vielzahl von additiv hergestellten internen Verstärkungsstrukturen aufweist. Hierbei handelt es sich beispielsweise um eine aus Metall hergestellte Verstärkung, die in einen additiv aufgebrachten Zement eingebettet ist.

Aus WO 2013/120889 A1 ist ein additives Herstellungsverfahren für einen Turm einer Windenergieanlage bekannt geworden. Zur Herstellung dieses Turms wird eine Gleitschalung verwendet, die wendelförmig über den entstehenden Turm bewegt wird, um Zement nach und nach aufzubringen und so in die Höhe zu wachsen.

Der Erfindung liegt die Aufgabe zugrunde, ein Verfahren zur Herstellung eines Turms für eine Windenergieanlage bereitzustellen, das mit einfachen Mitteln die Errichtung des Turms für die Windenergieanlage erlaubt.

Erfindungsgemäß wird die Aufgabe durch ein Verfahren mit den Merkmalen nach Anspruch 1 gelöst. Vorteilhafte Ausgestaltungen bilden die Gegenstände der Unteransprüche.

Das erfindungsgemäße Verfahren dient zum Errichten eines Turms für eine Windenergieanlage. Der Turm besteht aus einer Mehrzahl von übereinanderstehenden Sektionen. Das erfindungsgemäße Verfahren weist folgende Verfahrensschritte auf:
Mindestens zwei ineinander stehende, ringförmig geschlossene Sektionen des Turms werden mit einem additiven Herstellungsverfahren hergestellt. Ineinander stehend bedeutet hierbei, dass, ausgehend von einem Zentrum, in radialer Richtung zuerst eine innere Sektion für den Turm steht und diese wiederum von einer weiteren Sektion umgeben ist. Die Sektionen werden bereits als geschlossene, monolithische Sektionen hergestellt und nicht aus mehreren Segmenten montiert. Insbesondere bei einem sehr großen Durchmesser einer Sektion, beispielsweise 10 Meter oder mehr, ist es von Vorteil, dass keine vertikalen Fugen zwischen Sektionssegmenten notwendig sind, die mit teilweise erheblichem Aufwand zu verbinden sind. Für das additive Herstellungsverfahren kann insbesondere ein 3D-Drucker verwendet werden. Der geeignete 3D-Drucker muss nicht beliebig im Raum verfahrbar sein, es reicht beispielsweise für die Herstellung einer ringförmigen Sektion aus, wenn sich der Druckkopf des 3D-Druckers konzentrisch zu dem Sektionsmittelpunkt bewegen kann. Dem verwendeten Beton können verschiedene Zuschlagstoffe oder Additive, wie beispielsweise Fasern, beigegeben werden.

Die hergestellten Sektionen des Turms werden an einem Errichtungsplatz für die Errichtung des Turms bereitgestellt. Bereitstellen bedeutet hierbei auch, dass die Sektionen des Turms von den Herstellungsplätzen direkt oder mittelbar zu dem Turm zusammengefügt werden können, beispielsweise über einen Hebekran. Erfindungsgemäß erfolgt das Errichten des Turms aus den bereitgestellten Sektionen, indem diese übereinandergestellt werden. In einer vorteilhaften Ausgestaltung des Verfahrens wird jeweils die äußerste von mehreren ineinander stehenden Sektionen von dem Kran aufgenommen und auf das Fundament bzw. auf eine bereits darauf stehende Sektion gestellt und damit verbunden.

Eine vorteilhafte Ausgestaltung des Verfahrens besteht darin, übereinanderstehende Sektionen des Turms in unterschiedlichen Herstellungsplätzen herzustellen und bereitzustellen. Dies erleichtert die Herstellung der Sektionen in den Herstellungsplätzen, da nicht zwei im Turm direkt übereinanderstehende Sektionen als ineinander stehende Sektionen in einem Herstellungsplatz bereitgestellt werden. Nur jede zweite, dritte oder n-te Sektion, je nach Anzahl der Herstellungsplätze, kommt von einem der Herstellungsplätze, so dass die Abstände der ineinander stehenden Sektionen an den Herstellungsplätzen größer sind. Dies vereinfacht räumlich ganz erheblich die Herstellung der ineinander stehenden Sektionen des Turms in den Herstellungsplätzen.

Bevorzugt befinden sich die Herstellungsplätze in unmittelbarer Nähe des Errichtungsplatzes, das heißt, des Fundaments, auf dem der Turm errichtet wird. Unmittelbare Nähe bedeutet hier beispielsweise, dass die Herstellungsplätze und das Fundament von einem Hebekran derart erreichbar sind, dass der Hebekran die Sektionen direkt von dem jeweiligen Herstellungsplatz auf das Fundament heben kann. Das ist besonders vorteilhaft bei einem sehr großen Durchmesser der äußersten Sektionen, da sich jeder zusätzliche Transport erübrigt. Alternativ befinden sich die Herstellungsplätze in der Nähe, aber nicht unmittelbar neben dem Errichtungsplatz und die Sektionen werden von den Herstellungsplätzen zu Bereitstellungsplätzen transportiert, wobei sich die Bereitstellungsplätze unmittelbar neben dem Errichtungsplatz befinden und bevorzugt mit einem Hebekran am Errichtungsplatz verbaut werden können.

In einer bevorzugten Ausgestaltung sind die Herstellungsplätze für die Dauer des Herstellungsprozesses eingehaust. Eingehauste Herstellungsplätze besitzen den Vorteil, dass Umwelteinflüsse wie Regen oder Schmutz von der Herstellung der Sektionen fortgehalten werden können. Weiterhin können bei einer Ausführung der Einhausung mit isolierenden Elementen definierte Werkstattbedingungen geschaffen werden. Auch ist es vorteilhafterweise möglich, in der Einhausung eine konditionierte Atmosphäre zu schaffen, die den Herstellungsprozess der stehenden Sektionen des Turms befördert und die Möglichkeit schafft, die Materialeigenschaften in gewünschter Weise zu beeinflussen, insbesondere wenn höherfeste Betone verwendet werden. Konditionierte Atmosphäre kann eine Steuerung der Temperatur, des Luftdrucks und/oder der Luftfeuchtigkeit sowie deren zeitlichen Verlauf bedeuten. Alternativ oder zusätzlich ist es möglich, in der Einhausung eine erzwungene Luftumwälzung, das heißt, zusätzliche gesteuerte Luftbewegung um die Sektionen und/oder zwischen den Sektionen, zu schaffen, um Einfluss auf das Aushärteverhalten des Betons zu nehmen und so die Ausbringungsgeschwindigkeit zu erhöhen. Die gesteuerte Luftbewegung kann mit Hilfe von Gebläsen und/oder von festen oder beweglichen Leitschaufeln an geeigneten Stellen erzeugt werden.

In einer bevorzugten Weiterbildung des Verfahrens werden die ineinander stehenden Sektionen konzentrisch stehend hergestellt. Dies bedeutet, dass mit dem Herstellungsprozess Sektionen entstehen, die einen gemeinsamen Mittelpunkt besitzen.

Bei der Errichtung von Türmen für Windenergieanlagen hat es sich als vorteilhaft herausgestellt, mindestens eine der Sektionen in einer sich von unten nach oben verjüngenden Form zu verwenden, da der Durchmesser des Turms im Bereich des Fundaments deutlich größer als im Bereich des Maschinenhauses ist. Beispielsweise sind die sich verjüngenden Elemente mit einem konstanten Konuswinkel ausgebildet. Alternativ verjüngen sich die Sektionen derart, dass sich beim fertig errichteten Turm eine äußere Kontur ergibt, die einer Parabel oder Hyperbel ähnelt. Die sich verjüngende Form erlaubt es, mehrere Sektionen konzentrisch ineinander stehend an den Herstellungsplätzen bereitzustellen.

In einer weiter bevorzugten Ausgestaltung weist eine Wandung der konischen Sektionen einen unteren Durchmesser auf, der mit einem oberen Durchmesser einer anderen Sektion im Wesentlichen übereinstimmt bzw. die Wandung weist einen oberen Durchmesser auf, der mit einem unteren Durchmesser einer anderen Sektion im Wesentlichen übereinstimmt. Besonders bevorzugt befindet sich die jeweils andere Sektion in einem anderen Herstellungsplatz. So passen die Wandungen der abwechselnd aus den Herstellungsplätzen entnommenen Sektionen in ihren Durchmessern jeweils aufeinander.

In einer bevorzugten Ausgestaltung weist die mindestens eine Sektion mit der sich verjüngenden Form eine von unten nach oben ansteigende Wandstärke auf. So kann eine weiter unten im Turm, das heißt, näher zu dem Fundament, stehende Sektion eine geringere Wandstärke aufweisen als eine weiter oben, das heißt, näher zu der Gondel, stehende Sektion. Durch die Fertigung vor Ort werden sehr große Durchmesser der Sektionen bautechnisch leichter realisierbar, die strukturmechanisch eine deutlich geringere Wandstärke erfordern. Im oberen Bereich des Turms hingegen kann aufgrund des für die Verbindung zur Gondel notwendigerweise geringeren Durchmessers eine größere Wandstärke erforderlich sein, um die auftretenden Lasten aufzunehmen. Wenn die einzelne Sektion eine von unten nach oben ansteigende Wandstärke aufweist, vermeidet dies sprungartige Änderungen der Wandstärke von einer Sektion zur anderen. Sprungartige Änderungen der Wandstärke führen zu ungleichmäßigen Spannungen in der Wandung, diese müssten durch zusätzliche Maßnahmen, beispielsweise zusätzliche Bewehrung, ausgeglichen werden.

In einer Ausgestaltung besitzen die Sektionen in einem der Herstellungsplätze die gleiche Höhe. Dies erleichtert das additive Herstellungsverfahren für die Sektionen am Herstellungsplatz.

In einer bevorzugten Ausgestaltung weist die Vorrichtung zum additiven Herstellen der Sektionen, das heißt, der 3D-Drucker, zusätzlich ein Werkzeug zum Veredeln der Oberfläche der Sektionen auf, insbesondere zum Glätten der Oberfläche der Wandung, so dass nach dem Ende der Herstellung keine ungleichmäßigen Strukturen mehr vorhanden sind. Das Werkzeug kann beispielsweise nach Art eines oder mehrerer Spachtel oder Rakel oder als oszillierendes oder rotierendes Werkzeug oder als Kombination dieser ausgestaltet sein. Das Werkzeug ist bevorzugt derart ausgestaltet, dass es die Oberfläche der Wandung in einem Bereich bearbeitet, in dem der Werkstoff der Wandung bereits teilweise ausgehärtet und damit formstabiler ist als die frisch aufgebrachte Werkstoffschicht. Zusätzlich oder alternativ kann ein Werkzeug zum Schleifen, das heißt Planschleifen oder Feinschleifen, der Stirnfläche der Sektion vorgesehen sein, so dass die Fugen zwischen den Sektionen bei der Errichtung ohne Mörtel ausgeführt werden können. Dieses Werkzeug wird bevorzugt erst eingesetzt, wenn die Stirnseite der Sektion bereits so weit ausgehärtet ist, dass ein Schleifen möglich ist. Weiterhin kann zusätzlich oder alternativ ein Werkzeug zum Einbringen zusätzlicher Komponenten, wie beispielsweise von Befestigungspunkten für Turmeinbauten, vorgesehen sein. Bevorzugt werden alle Sektionen aus dem gleichen Material, insbesondere dem gleichen Beton hergestellt.

Im Hinblick auf die Reihenfolge der Herstellung der Sektionen können zwei grundlegende Ansätze unterschieden werden. Bei einem ersten Ansatz werden die Sektionen nacheinander hergestellt, wobei bevorzugt mit der Herstellung der äußeren Sektion in einem Herstellungsplatz begonnen wird. In einem alternativen Ansatz kann vorgesehen sein, dass die Herstellung von zwei oder mehr Sektionen an mindestens einem der Herstellungsplätze gleichzeitig erfolgt. Bei einem additiven Herstellungsverfahren werden dann die Sektionen gleichzeitig immer höher hergestellt. Bevorzugt weist die Vorrichtung zum additiven Herstellen der Sektionen in diesem Fall mehrere, im Wesentlichen gleichartig aufgebaute Druckköpfe auf.

Ein bevorzugtes Beispiel wird nachfolgend näher erläutert. Es zeigen:
- Fig. 1: ein Fundament für einen Turm einer Windenergieanlage mit zwei benachbarten Herstellungsplätzen mit Einhausungen,
- Fig. 2: einen Herstellungsplatz mit vier ineinander stehenden Sektionen in einer Ansicht von oben ohne Dach der Einhausung,
- Fig. 3: eine Einrichtung zum additiven Herstellen von vier ineinander stehenden Sektionen,
- Fig. 4: eine alternative Einrichtung zum Herstellen von vier ineinander stehenden Sektionen,
- Fig. 5: einen Schritt bei der Errichtung eines Turmes aus den hergestellten Sektionen,
- Fig. 6: drei Sektionen eines Turmes mit konisch verlaufendem Profil im Schnitt,
- Fig. 7: drei Sektionen eines Turmes mit parabelförmig verlaufendem Profil im Schnitt und
- Fig. 8: zwei Diagramme von Wandstärke und Turmradius abhängig von der Höhe für Türme mit unterschiedlich verlaufenden Profilen.

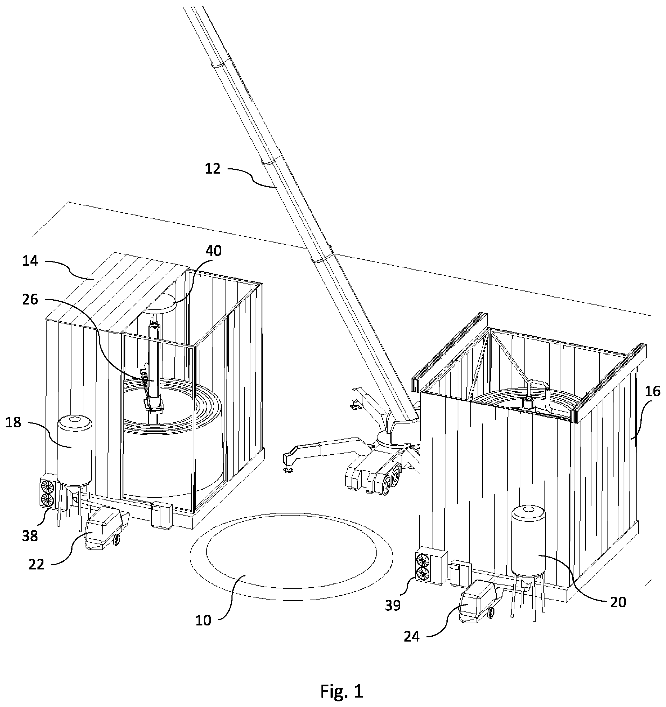

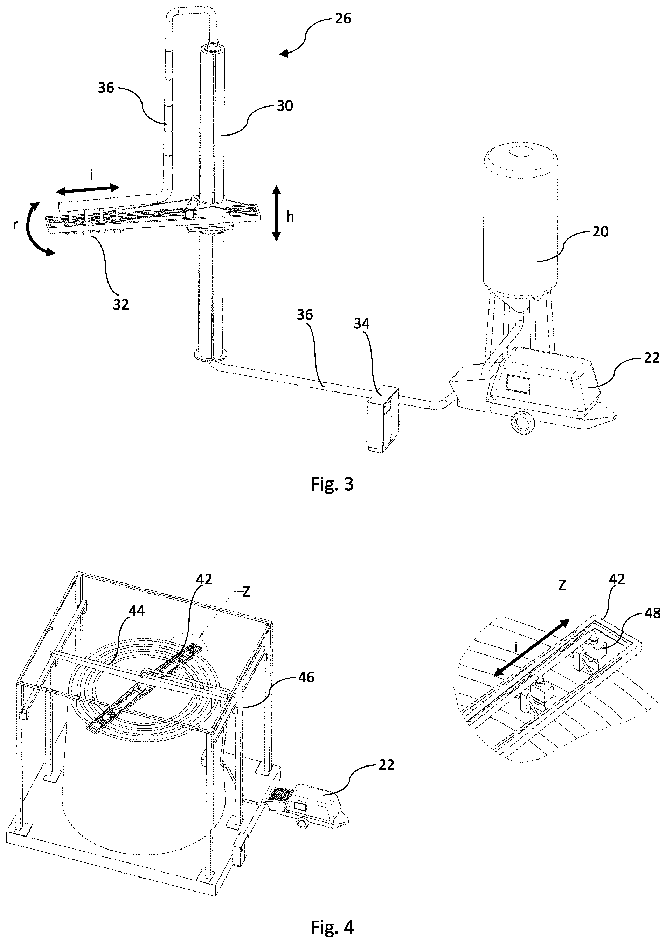

Figur 1 zeigt ein Fundament 10 für einen zu errichtenden Turm einer Windenergieanlage. Neben dem Fundament 10 ist ein erster Kran 12 vorgesehen, der zumindest im unteren Bereich des Turms ringförmige Turmsektionen übereinander zu einem Turm stapeln kann. Seitlich neben dem Fundament 10 sind zwei Herstellungsplätze 14, 16 vorgesehen. Jeder der Herstellungsplätze 14, 16 besitzt eine Speichereinheit 18, 20, die jeweils mit einer Fördereinheit 22, 24 verbunden sind und so eine additive Herstelleinrichtung 26 speisen. Die additive Herstelleinrichtung 26 wird weiter unten mit dem Bezug auf die Figuren 3 und 4 näher erläutert. Die beiden Herstellungsplätze 14, 16 sind jeweils mit einer Einhausung versehen, wobei die Atmosphäre in der Einhausung durch ein Klimagerät 38, 39 im Hinblick auf Temperatur, Luftdruck und Luftfeuchte beeinflusst werden kann, auch deren zeitlicher Verlauf kann eingestellt werden. Ein Umlüfter 40 im Inneren der Einhausung unterstützt eine gleichmäßige Verteilung.

Im eingehausten Zustand der Herstellungsplätz 14, 16 werden jeweils mehrere, im Beispiel vier, ineinander stehende, ringförmig geschlossene Sektionen hergestellt. Jede Sektion ist ringförmig geschlossen, beschreibt also einen 360°-Winkel. Ineinander stehend bedeutet hierbei, dass die Sektion mit dem kleinsten Durchmesser am weitesten innen, also am nächsten zum Zentrum steht, gefolgt von einer Sektion mit einem größeren Durchmesser. Wie in Figur 1 zu erkennen, stehen je vier Sektionen so ineinander gestellt in beiden Herstellungsplätzen 14, 16. Jede der Sektionen weist einen konstanten Konuswinkel auf, wobei die stehende Sektion auf ihrem Ende mit dem größeren Durchmesser steht und sich nach oben hin zu einem kleineren Durchmesser verjüngt. Der Konuswinkel ist konstant über die Höhe der ringförmigen Sektion.

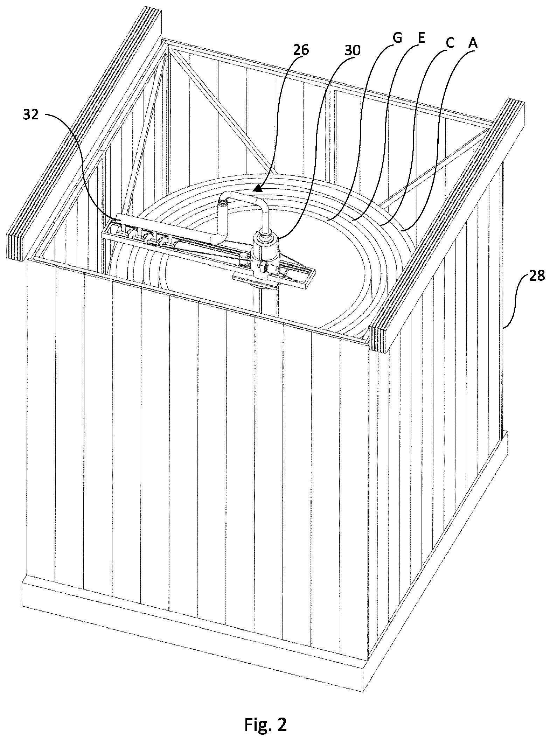

Bei der Errichtung des Turms werden nun Sektionen abwechselnd von den Herstellungsplätzen 14 und 16 übereinandergestellt. Beispielsweise, ohne hierauf die Erfindung zu reduzieren, sei angenommen, dass im Herstellungsplatz 14 die untere Sektion A des Turms hergestellt sei. Dann wird die sich anschließende Sektion, die auf die Sektion A gestellt wird, also Sektion B, in dem anderen Herstellungsplatz 16 hergestellt. Die nachfolgende Sektion in der Höhe C wird dann wieder in dem Herstellungsplatz 14 der Sektion A hergestellt. Für den Herstellungsplatz 14 ergibt sich dann, von außen nach innen betrachtet, die Reihenfolge der Sektionen A, C, E und G, wie in Figur 2 zu erkennen, während sich für den Herstellungsplatz 16 die Reihenfolge der Sektionen von außen nach innen mit B, D, F ergibt. Der Vorteil, dass in jedem der Herstellungsplätze stets eine Sektion ausgelassen ist, besteht darin, dass der Abstand zwischen den Sektionen bei ihrer Herstellung größer ist. Dies ist leicht einzusehen, wenn man annimmt, dass bei einer Turmlänge von 120 m jede Sektion eine Höhe von 8 m besitzt. In diesem Fall könnten in einem Herstellungsplatz 14 dann 8 Sektionen hergestellt werden und in dem anderen Herstellungsplatz 16 dann die verbleibenden 7 Sektionen. Nimmt man ferner an, dass der Durchmesser des Turms für die Windenergieanlage am Fundament 12 m und im Bereich des Maschinenhauses 4 m beträgt, so reduziert sich der Durchmesser von jeder Sektion zur nächsten um ca. 530 mm. Dies bedeutet, der Durchmesser einer jeden Sektion ist an ihrem Fußbereich um 530 mm größer als an ihrem Kopfbereich. Bei einer Wandstärke von 250 mm bis 300 mm wäre der Abstand der ineinander stehenden Sektionen nur 200 mm bis 300 mm, was möglicherweise zu gering für Abstreifeinrichtungen und ähnliches ist. Durch die alternierende Anordnung der Ringe in zwei Herstellungsplätzen ist der Abstand mindestens doppelt so groß. Der Durchmesser der innen stehenden Sektion ist dann nicht 530 mm kleiner, sondern 1060 mm, wodurch auch bei großer Wandstärke ausreichend Platz für Hilfsmittel bei der Bearbeitung der Sektionen bleibt.

Selbstverständlich kann, falls mit größeren Wandstärken, größeren Höhen oder niedrigeren Sektionshöhen des Turms gearbeitet wird, auch auf mehr als zwei Herstellungsplätze zurückgegriffen werden. Bei drei Herstellungsplätzen ergibt sich dann die Reihenfolge der Sektionen A, D, G, etc., während im zweiten Herstellungsplatz die Sektionen B, E, H ... und im dritten Herstellungsplatz die Sektionen C, F, I ... ineinander stehen. Da alle Herstellungsplätze nahe am Fundament 10 der Windenergieanlage errichtet werden können, kann mit einem Kran 12 hier auf die fertig hergestellten Sektionen zurückgegriffen werden.

In Figur 1 ist jeweils eine Einhausung für die Herstellungsplätze 14, 16 vorgesehen. Die Einhausung besitzt zwei Aufgaben: einerseits schützt sie während des Herstellungsprozesses die Sektionen vor schädlichen Umwelteinflüssen. Andererseits erlaubt die Einhausung es, bis zu einem gewissen Grad eine konditionierte Atmosphäre in der Einhausung zu schaffen, um so die Bedingungen der additiven Herstellung zu verbessern.

Nach Fertigstellung der Sektionen wird zumindest das Dach der Einhausung entfernt, um von oben Zugriff auf die Sektionen zu erhalten.

Figur 2 zeigt eine Einhausung 28, bei der das Dach transparent dargestellt ist. In Fig. 2 erfolgt das additive Herstellungsverfahren der Sektionen A, C, E und G. Die Herstellung erfolgt über die Herstelleinrichtung 26, die einen vertikal stehenden Mast 30 und einen horizontalen Arm 32 besitzt. Der horizontale Arm 32 bewegt sich kreisförmig um den Mast 30. Zugleich wird der horizontale Arm 32 an dem Mast in der Höhe verstellt, so dass der Arm 32 sich gleichmäßig mit der wachsenden Höhe der Sektionen A bis G anhebt.

Figur 3 zeigt in einer schematischen Ansicht den gesamten Aufbau der Herstelleinrichtung 26. Deutlich zu erkennen ist der zentral in den Sektionen stehende vertikale Mast 30 mit seinem horizontalen Arm 32, der um den Mast 30 gedreht werden kann (Doppelpfeil r). Zugleich kann der Arm 32 in Richtung des Doppelpfeils h in der Höhe verstellt werden. Zur Herstellung von Sektionen, die sich über ihre Höhe verjüngen, kann sich der Arm 32 mit seinen Austrittsdüsen in Richtung des Doppelpfeils i nach innen und außen bewegen. Eine Steuerung 34 steuert die Bewegungen des Arms 32. Der Arm 32 ist mit einer flexiblen Leitung 36 verbunden, die von einem Speicher 20 über eine Fördereinheit 22 bis zum Arm 32 verläuft. Die Fördereinheit 22 hat die Aufgabe, flüssigen Beton aus dem Speicher 20 über die Leitung 36 zu dem Arm 32 zu fördern, wo der geförderte Beton austritt, um die Sektionen zu bilden. Je nach Ausgestaltung ist es möglich, dass die Steuerung 34 auch die Förderstation 22 steuert.

Figur 4 zeigt eine andere Ausgestaltung der Herstelleinrichtung. Hier ist ein Doppelarm 42 an einer Traverse 44 drehbar angebracht. Die Traverse 44 wird von einer Tragstruktur 46 getragen und kann in der Höhe verstellt werden. Auf jeder Seite des Doppelarms 42 ist eine Anzahl von Arbeitsköpfen 48 für den 3D-Druck vorhanden, wobei in der Vergrößerung Z zu erkennen ist, dass auch diese Arbeitsköpfe 48 in radialer Richtung bewegbar sind (Doppelpfeil i). Hier ist auf dieser Seite des Doppelarms 42 nur für jede zweite Sektion ein Arbeitskopf 48 vorgesehen; weitere Arbeitsköpfe 48 sind auf der anderen Seite des Doppelarms 42 vorgesehen. Die Arbeitsköpfe 48 bringen das Material zur Herstellung der Sektionen aus und können weiterhin Werkzeuge zum Veredeln der Oberfläche aufweisen, beispielsweise zum Glätten oder Schleifen.

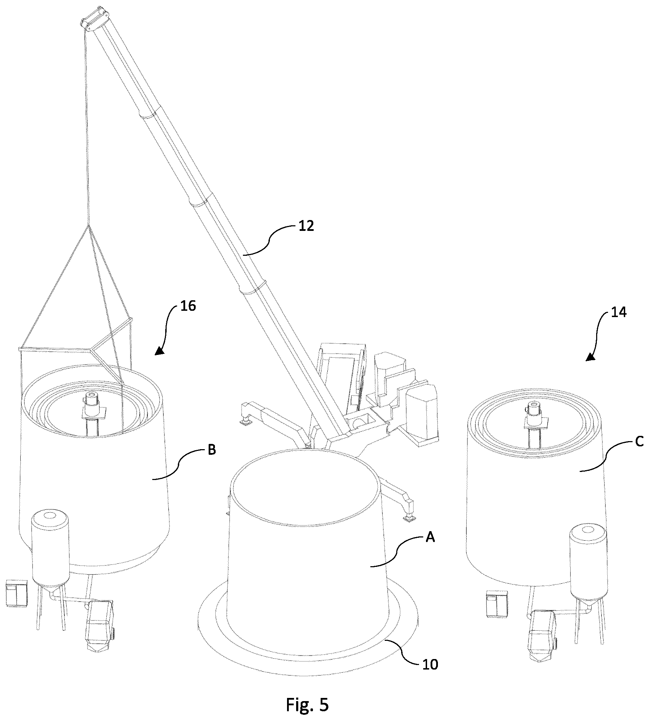

Figur 5 zeigt einen Schritt bei der Errichtung des Turmes aus den hergestellten Sektionen. Hier sind die Einhausungen der Herstellplätze 14, 16 entfernt, so dass die Sektionen mit Hilfe des Krans 12 aufgenommen und auf das Fundament 10 bzw. die bereits darauf errichteten Sektionen gesetzt werden können. Auf dem Fundament 10 steht bereits die Sektion A, die auf dem Herstellplatz 14 hergestellt wurde. An dem Kran 12 ist die Sektion B angeschlagen und wird gerade angehoben, wobei die Sektion B auf dem Herstellplatz 16 hergestellt wurde. Wenn die Sektion B auf der Sektion A abgesetzt und mit dieser verbunden ist, wird als nächstes die Sektion C wieder vom Herstellplatz 14 aufgenommen und auf die Sektion B gesetzt und so weiter.

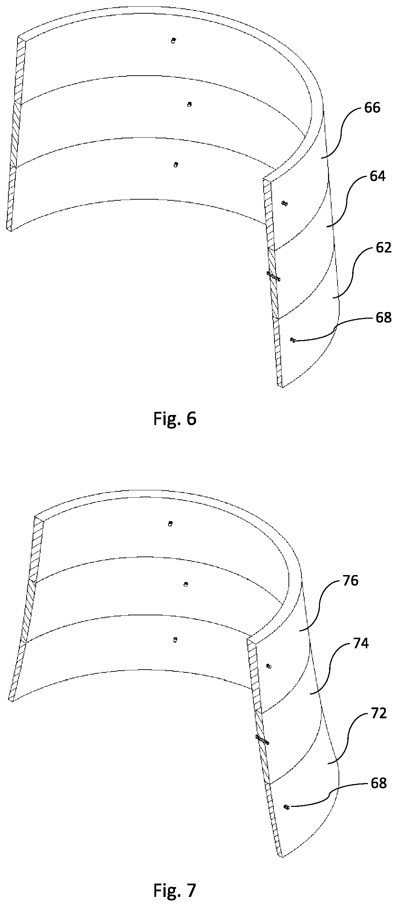

Figur 6 zeigt im Schnitt drei Sektionen 62, 64, 66 eines Turmes mit konisch verlaufendem Profil im Schnitt. Die Sektionen 62, 64, 66 weisen jeweils einen konstanten Konuswinkel der äußeren und der inneren Kontur auf, jedoch sind die beiden Konuswinkel unterschiedlich, so dass jede Sektion 62, 64, 66 an ihrem oberen Ende eine größere Wandstärke aufweist als an ihrem unteren Ende. Die Durchmesser der Sektionen 62, 64, 66 und ihre jeweiligen Wandstärken sind derart gestaltet, dass sie genau aufeinanderpassen. Durch die von unten nach oben zunehmenden Wandstärken der einzelnen Sektionen ist möglich, einen Turm zu errichten, der an seinem unteren Ende eine geringe Wandstärke bei großem Durchmesser und an seinem oberen Ende eine größere Wandstärke bei geringerem Durchmesser aufweist, womit eine Aufnahme der Lasten bei optimalem Materialeinsatz möglich ist. Außerdem erkennbar sind Befestigungspunkte für Turmeinbauten 68, die während der Fertigung der Sektionen eingebracht wurden.

Figur 7 zeigt ebenfalls im Schnitt drei Sektionen 72, 74, 76 eines Turmes mit parabelförmig verlaufendem Profil im Schnitt. Die Sektionen 72, 74, 76 verlaufen jeweils mit ihrer äußeren und inneren Kontur entsprechend einem Abschnitt der Parabel, derart, dass jede Sektion 72, 74, 76 an ihrem oberen Ende eine größere Wandstärke aufweist als an ihrem unteren Ende. Die Durchmesser und Wandstärken sind ebenfalls derart gestaltet, dass die Sektionen 72, 74, 76 ohne Überstand bündig aufeinanderpassen.

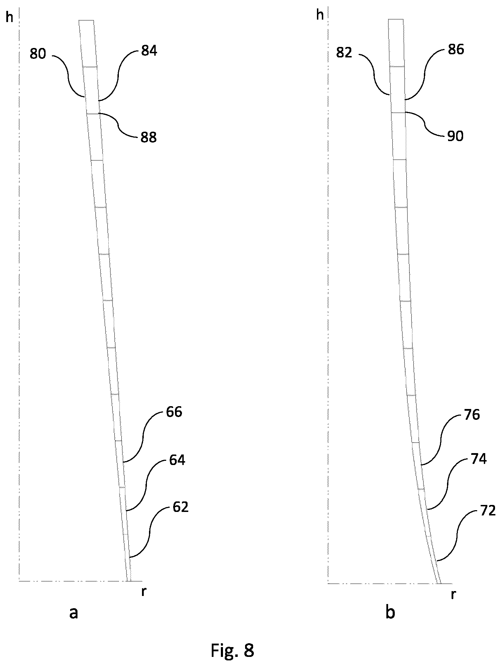

Figur 8 zeigt schematisch den Verlauf des Durchmessers bzw. Radius' r und der Wandstärke abhängig von der Höhe h. Figur 8a zeigt ein konisch verlaufendes Profil mit den Sektionen 62, 64, 66 und Figur 8b zeigt ein parabelförmig verlaufendes Profil mit den Sektionen 72, 74, 76. Dargestellt ist der Verlauf der Innenseite 80, 82 und der Außenseite 84, 86 der Turmwand bzw. der Sektionen. Die Fugen 88, 90 zwischen den aufeinander stehenden Sektionen sind ebenfalls dargestellt. Deutlich zu erkennen ist, dass die Wandstärke im oberen Bereich des Turmes größer ist als im unteren Bereich und dass der Durchmesser von unten nach oben abnimmt.

Das erfindungsgemäße Verfahren bietet die Möglichkeit, auch große Zement- oder Betontürme vor Ort ohne Transport herzustellen. Die Sektionen werden vor Ort in einem 3D-Druckverfahren hergestellt. Bei dem eingesetzten Material und dem Aufbau der Sektionen für den Turm bestehen zahlreiche unterschiedliche Möglichkeiten. So können bei dem additiven Herstellungsverfahren beispielsweise auch Verstärkungsstrukturen oder Sollbruchstellen für Öffnungen mit in die Turmsektion eingebracht werden.

Die vorstehende Erfindung wird nachfolgend an einzelnen Fällen in ihren - Merkmalen zusammengefasst:
1. Verfahren zum Errichten eines Turms für eine Windenergieanlage, wobei der Turm eine Mehrzahl von übereinanderstehenden Sektionen aufweist, dadurch gekennzeichnet, dass das Verfahren folgende Schritte aufweist:
   a. Herstellen von mindestens zwei ineinander stehenden Sektionen des Turms mit einem additiven Herstellungsverfahren,
   b. Bereitstellen der hergestellten Sektionen des Turms an einem Errichtungsplatz des Turms und
   c. Errichten des Turms aus den bereitgestellten Sektionen auf dem Errichtungsplatz, indem diese übereinandergestellt werden.
2. Verfahren nach Fall 1, dadurch gekennzeichnet, dass jeweils eine äußerste Sektion der mehreren ineinander stehenden Sektionen von einem Kran aufgenommen, gehoben und auf dem Errichtungsplatz bzw. auf einer bereits darauf stehenden Sektion abgesetzt und damit verbunden wird.
3. Verfahren nach Fall 1 oder 2, dadurch gekennzeichnet, dass das Herstellen der Sektionen des Turms auf zwei oder mehr Herstellungsplätzen erfolgt.
4. Verfahren nach Fall 3, dadurch gekennzeichnet, dass beim Errichten des Turms aus den bereitgestellten Sektionen abwechselnd Sektionen von unterschiedlichen Herstellungsplätzen übereinandergestellt werden.
5. Verfahren nach einem der Fälle 3 oder 4, dadurch gekennzeichnet, dass die Herstellungsplätze sich in unmittelbarer Nähe des Errichtungsplatzes befinden.
6. Verfahren nach einem der Fälle 1 bis 5, gekennzeichnet durch Einhausen von mindestens einem der Herstellungsplätze für die Dauer der Herstellung der Sektionen.
7. Verfahren nach Fall 6, dadurch gekennzeichnet, dass in dem eingehausten Herstellungsplatz eine konditionierte Atmosphäre und/oder erzwungene Luftumwälzung vorherrscht.
8. Verfahren nach einem der Fälle 1 bis 7, dadurch gekennzeichnet, dass die Sektionen konzentrisch stehend hergestellt werden.
9. Verfahren nach einem der Fälle 1 bis 8, dadurch gekennzeichnet, dass mindestens eine der Sektionen eine sich von unten nach oben verjüngende Form aufweist.
10. Verfahren nach Fall 9, dadurch gekennzeichnet, dass eine Wandung der mindestens einen Sektion mit der sich verjüngenden Form einen unteren Durchmesser aufweist, der mit einem oberen Durchmesser einer anderen Sektion im Wesentlichen übereinstimmt, und/oder einen oberen Durchmesser aufweist, der mit einem unteren Durchmesser einer anderen Sektion im Wesentlichen übereinstimmt.
11. Verfahren nach einem der Fälle 9 oder 10, dadurch gekennzeichnet, dass die mindestens eine Sektion mit der sich verjüngenden Form eine von unten nach oben ansteigende Wandstärke aufweist.
12. Verfahren nach einem der Fälle 1 bis 11, dadurch gekennzeichnet, dass eine Vorrichtung zum additiven Herstellen der Sektionen zusätzlich ein Werkzeug zum Veredeln der Oberfläche der Sektionen aufweist.
13. Verfahren nach einem der Fälle 1 bis 12, dadurch gekennzeichnet, dass die Herstellung der Sektionen an mindestens einem der Herstellungsplätze nacheinander erfolgt, wobei mit der Herstellung der äußeren Sektion begonnen wird.
14. Verfahren nach einem der Fälle 1 bis 12, dadurch gekennzeichnet, dass die Herstellung der Sektionen an mindestens einem der Herstellungsplätze gleichzeitig erfolgt.
15. Verfahren nach Fall 14, dadurch gekennzeichnet, dass die Vorrichtung zum additiven Herstellen der Sektionen mehrere, im Wesentlichen gleichartig aufgebaute Druckköpfe aufweist.

### Bezugszeichenliste

- 10: Fundament
- 12: Kran
- 14, 16: Herstellungsplatz
- 18, 20: Speichereinheit
- 22, 24: Fördereinheit
- 26: Herstellungseinrichtung
- 28: Einhausung
- 30: Mast
- 32: horizontaler Arm
- 34: Steuerung
- 36: Leitung
- 38, 39: Klimagerät
- 40: Umlüfter
- 42: Doppelarm
- 44: Traverse
- 46: Tragstruktur
- 48: Arbeitskopf
- 62, 64, 66: Sektion mit konischem Profil
- 68: Befestigungspunkt
- 72, 74, 76: Sektion mit parabelförmigem Profil
- 80, 82: Innenseite
- 84, 86: Außenseite
- 88, 90: Fuge
- A, B, C, D, E, F, G: Sektion

## Patentansprüche

1. Verfahren zum Errichten eines Turms für eine Windenergieanlage, wobei der Turm eine Mehrzahl von übereinanderstehenden Sektionen aufweist, **dadurch gekennzeichnet, dass** das Verfahren folgende Schritte aufweist:
a. Herstellen von mindestens zwei ineinander stehenden Sektionen des Turms mit einem additiven Herstellungsverfahren, wobei eine Vorrichtung zum additiven Herstellen der Sektionen zusätzlich ein Werkzeug zum Veredeln der Oberfläche der Sektionen aufweist,
b. Bereitstellen der hergestellten Sektionen des Turms an einem Errichtungsplatz des Turms und
c. Errichten des Turms aus den bereitgestellten Sektionen auf dem Errichtungsplatz, indem diese übereinandergestellt werden.

2. Verfahren nach Anspruch 1, **dadurch gekennzeichnet, dass** jeweils eine äußerste Sektion der mehreren ineinander stehenden Sektionen von einem Kran aufgenommen, gehoben und auf dem Errichtungsplatz bzw. auf einer bereits darauf stehenden Sektion abgesetzt und damit verbunden wird.

3. Verfahren nach Anspruch 1 oder 2, **dadurch gekennzeichnet, dass** das Herstellen der Sektionen des Turms auf zwei oder mehr Herstellungsplätzen erfolgt.

4. Verfahren nach Anspruch 3, **dadurch gekennzeichnet, dass** beim Errichten des Turms aus den bereitgestellten Sektionen abwechselnd Sektionen von unterschiedlichen Herstellungsplätzen übereinandergestellt werden.

5. Verfahren nach einem der Ansprüche 3 bis 4, **dadurch gekennzeichnet, dass** die Herstellungsplätze sich in unmittelbarer Nähe des Errichtungsplatzes befinden.

6. Verfahren nach einem der Ansprüche 1 bis 5, **gekennzeichnet durch** Einhausen von mindestens einem der Herstellungsplätze für die Dauer der Herstellung der Sektionen.

7. Verfahren nach Anspruch 6, **dadurch gekennzeichnet, dass** in dem eingehausten Herstellungsplatz eine konditionierte Atmosphäre und/oder erzwungene Luftumwälzung vorherrscht.

8. Verfahren nach einem der Ansprüche 1 bis 7, **dadurch gekennzeichnet, dass** die Sektionen konzentrisch stehend hergestellt werden.

9. Verfahren nach einem der Ansprüche 1 bis 8, **dadurch gekennzeichnet, dass** mindestens eine der Sektionen eine sich von unten nach oben verjüngende Form aufweist.

10. Verfahren nach Anspruch 9, **dadurch gekennzeichnet, dass** eine Wandung der mindestens einen Sektion mit der sich verjüngenden Form einen unteren Durchmesser aufweist, der mit einem oberen Durchmesser einer anderen Sektion im Wesentlichen übereinstimmt, und/oder einen oberen Durchmesser aufweist, der mit einem unteren Durchmesser einer anderen Sektion im Wesentlichen übereinstimmt.

11. Verfahren nach Anspruch 9 oder 10, **dadurch gekennzeichnet, dass** die mindestens eine Sektion mit der sich verjüngenden Form eine von unten nach oben ansteigende Wandstärke aufweist.

12. Verfahren nach einem der Ansprüche 1 bis 11, **dadurch gekennzeichnet, dass** die Herstellung der Sektionen an mindestens einem der Herstellungsplätze nacheinander erfolgt, wobei mit der Herstellung der äußeren Sektion begonnen wird.

13. Verfahren nach einem der Ansprüche 1 bis 11, **dadurch gekennzeichnet, dass** die Herstellung der Sektionen an mindestens einem der Herstellungsplätze gleichzeitig erfolgt.

14. Verfahren nach Anspruch 13, **dadurch gekennzeichnet, dass** die Vorrichtung zum additiven Herstellen der Sektionen mehrere, im Wesentlichen gleichartig aufgebaute Druckköpfe aufweist.

15. Verfahren nach einem der Ansprüche 1 bis 14, **dadurch gekennzeichnet, dass** das Werkzeug zum Veredeln der Oberfläche der Sektionen als ein Werkzeug zum Glätten der Wandung und/oder zum Schleifen der Stirnfläche der Sektion vorgesehen ist.
